(19) Europäisches Patentamt / European Patent Office / Office européen des brevets

(11) **EP 4 336 420 A1**

(12) **EUROPEAN PATENT APPLICATION**

(43) Date of publication:
**13.03.2024   Bulletin 2024/11**

(21) Application number: **23179673.1**

(22) Date of filing: **16.06.2023**

(51) International Patent Classification (IPC):
*G06N 20/00* (2019.01)

(52) Cooperative Patent Classification (CPC):
**G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.09.2022   JP 2022144802**

(71) Applicant: **Fujitsu Limited
Kawasaki-shi, Kanagawa 211-8588 (JP)**

(72) Inventor: **SONODA, Ryosuke
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **TRAINING DATA GENERATING PROGRAM, TRAINING DATA GENERATION METHOD, AND INFORMATION PROCESSING APPARATUS**

(57)   A non-transitory computer-readable recording medium have stored therein a training data generation program causes a computer to execute a process including, identifying, a first plurality of pieces of training data having label of first value and a first attributes of second value respectively, a second plurality of pieces of training data having the label of the first value and the first attribute of a third values respectively, and a third plurality of pieces of training data having the label of a fourth value and the first attribute of the second value respectively, selecting first training data from among the second or the third plurality of pieces of the training data based on a specific probability, and generating third training data having the label of the first value and the first attribute of the second value based on the first plurality of pieces of training data and the first training data.

FIG.1

**Description**

FIELD

The embodiments discussed herein are related to a non-transitory computer-readable recording medium, a training data generation method, and an information processing apparatus.

BACKGROUND

A machine learning (ML) model is often used in a large number of decision making processes, such as university admission decisions or bank credit decisions. A typical purpose of the machine learning model is to train a relationship between a feature included in training data and a class, and predict a class of certain test data for which a class is not yet determined, on the basis of a feature of the test data by using the trained machine learning model. The training data is also referred to as observed data that is actually observed data. The test data is also referred to as unobserved data. Further, the class is, for example, university admission results or bank credit approval/denial. In this case, training may be considered as operation of approximating a feature included in each piece of training data and classifying the features for each class. The class into which each piece of data is classified may also be referred to as a label of each piece of data.

Meanwhile, acquirable training data may often be biased toward a specific class or a specific group. The group is a group that corresponds to, for example, an attribute, such as gender or a race. It is known that, if a machine learning model is trained by using the biased training data, the machine learning model does not appropriately fit a certain class or a certain group for which the number of pieces of data is small. As a result, a result of prediction performed by the machine learning model that is trained by using the biased training data is biased toward a specific class or a specific group, so that prediction accuracy is reduced and unfairness among groups may occur.

Of the problems as described above, bias of training data toward a specific class has been widely studied, and there is a known problem in that a machine learning model is not able to successfully train a minority class that is a class for which the number of pieces of training data is small as compared to a majority class that is a class for which the number of pieces of training data is large, and accuracy is reduced. In contrast, bias of training data toward a specific group has not fully been studied. Even if there is no imbalance among classes, if an imbalance occurs among groups, it is difficult for the machine learning model to appropriately perform training on a small group. In other words, it is possible to accurately perform training on the majority group, but it is difficult to accurately perform training on the minority group. Therefore, accuracy of the machine learning model is biased among the groups and fairness is reduced.

In recent years, in social implementation of machine learning, not only accuracy, but also fairness is increasingly becoming important. Therefore, not only an imbalance among classes of training data that may cause reduction of accuracy of the machine learning model, but also an imbalance among groups as a factor of fairness are serious concerns. From this viewpoint, there is a need for a technology of correcting an imbalance among groups and improving a trade-off between prediction accuracy and fairness.

Against the problems with reduction of the prediction accuracy due to the biased training data and occurrence of unfairness among groups, a technology for addressing the problems by equalizing the number of piece of data is known. In particular, an oversampling technique that aims at expansion of data is widely used. For example, with regard to bias of training data toward a specific class, a data oversampling technique that attempts to improve accuracy by generating synthetic data of a minority class is actively studied. In particular, in recent years, a fair oversampling technique that attempts to improve both of the accuracy and the fairness is becoming important.

As the oversampling technique, for example, a technique called a Fair Synthetic Minority Oversampling Technique (FSMOTE) has been proposed. Here, a set of pieces of training data that correspond to a combination of each of classes and each of groups among pieces of training data will be referred to as a cluster. FSMOTE is a method of equalizing the number of pieces of training data included in all of classes and all of groups, that is, included in clusters. In FSMOTE, to equalize sizes of the clusters, synthetic data is generated for each of the clusters by using SMOTE. Specifically, a new piece of training data is added by performing interpolation between a pair of pieces of training data in each of the clusters until the sizes of the clusters are equalized.

For example, related arts are disclosed in Joymallya Chakraborty, Suvodeep Majumder, Tim Menzies "Bias in Machine Learning Software: Why? How? What to do?" The 29th ACM Joint European Software Engineering Conference and Symposium on the Foundations of Software Engineering (ESEC/FSE), Athens, Greece, August 23-28, 2021

SUMMARY

Accordingly, it is an object in one aspect of an embodiment of the present invention to provide a training data generation program, a training data generation method, and an information processing apparatus that reduce probability of occurrence of overfitting.

According to an aspect of an embodiment, a training data generating program is executable by one or more computers. the training data generation program includes an instruction for identifying, from among a plurality of pieces of training data, a first plurality of pieces of training data, a second plurality of pieces of training data, and a third plurality of pieces of training data, each of the first plurality of pieces of training data having a label of a first value and a first attribute of a second value, each of the second plurality of pieces of training data having the label of the first value and the first attribute of a third value, each of the third plurality of pieces of training data having the label of a fourth value and the first attribute of the second value, an instruction for selecting first training data from among the second plurality of pieces of training data or the third plurality of pieces of the training data based on a specific probability, and an instruction for generating third training data having the label of the first value and the first attribute of the second value by using second training data of the first plurality of pieces of training data and the first training data.

BRIEF DESCRIPTION OF DRAWINGS

FIG. 1 is a block diagram of an information processing apparatus according to one embodiment;
FIG. 2 is a diagram illustrating an overview of a machine learning process performed by the information processing apparatus according to one embodiment;
FIG. 3 is a diagram for explaining selection of inter-class interpolation or inter-group interpolation performed by a pair selection unit;
FIG. 4 is a diagram illustrating an example of a training data interpolation process performed by a control unit according to a first embodiment;
FIG. 5 is a flowchart of a machine learning process performed by the information processing apparatus according to one embodiment;
FIG. 6 is a flowchart of a process of selecting a cluster that forms a pair according to the first embodiment;
FIG. 7 is a flowchart of a data selection process in the cluster that forms a pair;
FIG. 8 is a diagram illustrating improvement of a trade-off between prediction accuracy and fairness by the machine learning model according to one embodiment;
FIG. 9 is a flowchart of a process of selecting a cluster that forms a pair according to a second embodiment; and
FIG. 10 is a hardware configuration diagram of the information processing apparatus.

DESCRIPTION OF EMBODIMENTS

However, in the conventional oversampling technique, the synthetic data is generated by using pieces of training data included in a certain cluster for each of clusters such that the number of pieces of data divided into each of the classes and each of the groups is equalized. In this manner, data is generated from a single cluster, so that the conventional oversampling technique may reduce variation of data and reduce generalization performance of a machine learning model.

For example, even if FSMOTE is used, oversampling is performed by performing interpolation in the same kind of cluster, and therefore, training data that may cause overfitting (overtraining) in a specific class may be generated. Overfitting indicates a state in which a machine learning model fits to the training data but does not fit to different kinds of data including test data. In this case, prediction performance of the machine learning model may be reduced due to overfitting to the training data. Therefore, in the conventional oversampling technique, it is difficult to improve a trade-off between the prediction accuracy and the fairness.

Preferred embodiments of the present invention will be explained with reference to accompanying drawings. The training data generation program, the training data generation method, and the information processing apparatus disclosed in the present application are not limited by the embodiments below.

(a) First Embodiment

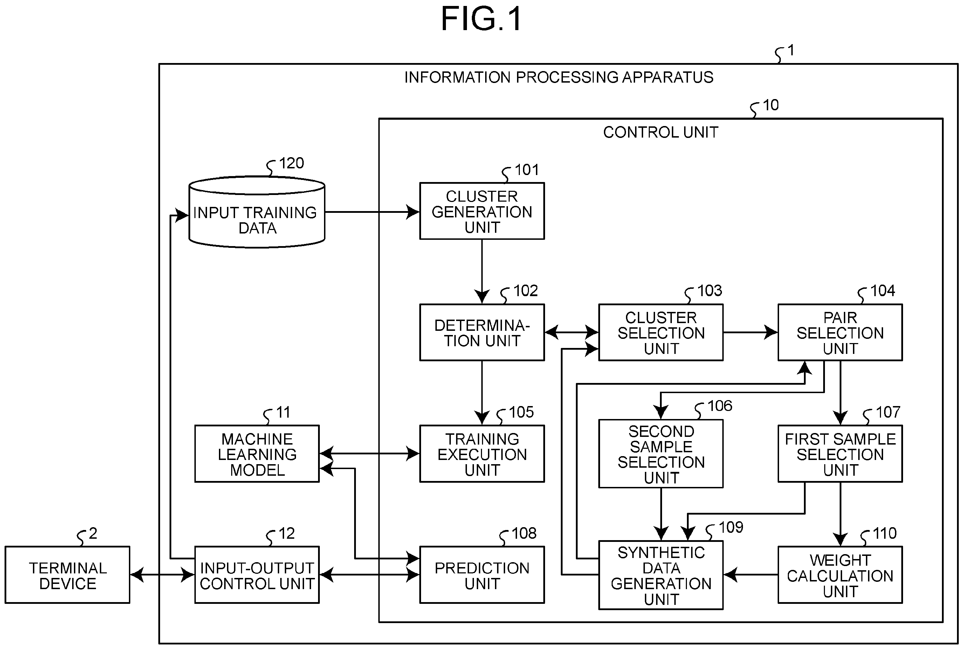

FIG. 1 is a block diagram of an information processing apparatus according to one embodiment. An information processing apparatus 1 according to the present embodiment is connected to a terminal device 2 that is operated by a user who uses a machine learning model 11.

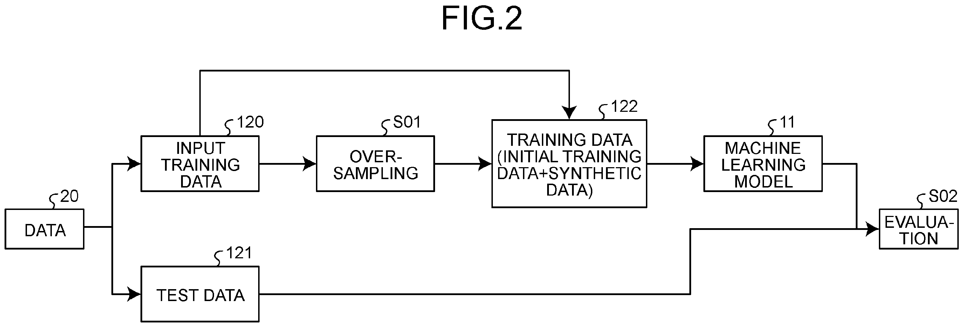

FIG. 2 is a diagram illustrating an overview of a machine learning process performed by the information processing apparatus. An overview of the machine learning process performed by the information processing apparatus 1 according to the embodiment will be described below with reference to FIG. 2.

The information processing apparatus 1 acquires data 20 that is used for machine learning from the terminal device 2. Subsequently, the information processing apparatus 1 classifies the data 20 into input training data 120 and test data 121. Further, the information processing apparatus 1 performs clustering on the input training data 120 and performs oversampling by interpolation such that a size of each of the clusters is equalized, on the basis of a positional relationship among the pieces of input training data that belong to each of the clusters (Step S01). Here, the size of the cluster is the number of pieces of data included in the cluster, for example.

Furthermore, the information processing apparatus 1 trains the machine learning model 11 for which overfitting is prevented, by using training data 122 that is obtained by adding synthetic data generated through the oversampling to the input training data 120. Thereafter, the information processing apparatus 1 evaluates the trained machine learning model 11 on the basis of an output that is obtained by using the test data 121 in the trained machine learning model 11 (Step S02).

Functions of the information processing apparatus 1 will be described in detail below with reference to FIG. 1. The information processing apparatus 1 includes, as illustrated in FIG. 1, a control unit 10, the machine learning model 11, and an input-output control unit 12.

The machine learning model 11 is a model that receives input of target information that belongs to a predetermined group, and outputs a class into which the input target is classified. The class into which the target is classified is also referred to as a label of the target. In other words, the machine learning model 11 predicts a label of an input target. Further, the group is one of features of the target and is also referred to as an attribute.

The input-output control unit 12 relays communication with the terminal device 2. The input-output control unit 12 receives input of the data 20 that is used for training and evaluation of the machine learning model 11 from the terminal device 2. Further, the input-output control unit 12 divides the acquired data 20 into a data group of the input training data 120 and a data group of the test data 121. Furthermore, the input-output control unit 12 stores the data group of the input training data 120 in the information processing apparatus 1. Moreover, the input-output control unit 12 outputs the data group of the test data 121 to a prediction unit 108.

After the control unit 10 completes generation of the synthetic data, training of the machine learning model 11, and evaluation of the trained machine learning model 11, the input-output control unit 12 receives input of an evaluation result from the control unit 10. Further, the input-output control unit 12 transmits the evaluation result to the terminal device 2.

The control unit 10 performs dividing of the data 20, the oversampling at Step S1 in FIG. 2, training of the machine learning model 11 using the input training data 120 and the synthetic data, and evaluation of the machine learning model 11 at Step S2 in FIG. 2. The control unit 10 will be described in detail below. The control unit 10 includes a cluster generation unit 101, a determination unit 102, a cluster selection unit 103, a pair selection unit 104, a training execution unit 105, a second sample selection unit 106, a first sample selection unit 107, the prediction unit 108, a synthetic data generation unit 109, and a weight calculation unit 110.

The cluster generation unit 101 acquires the input training data 120 that is stored in the information processing apparatus 1. Here, each piece of the input training data 120 includes teacher data that indicates a class (label) to which each piece of the input training data 120 belongs. In the following, the input training data 120 is represented by $D = \{X_i, Y_i, S_{i}\}_{i=1}^{n}$. X represents a feature of each piece of the input training data 120. Further, Y represents a class of each piece of the input training data 120. Furthermore, S represents a group to which each piece of the input training data 120 belongs. The group may be regarded as one of features. In this example, the class $Y \in \{-1, +1\}$, and the group $S \in \{a, b\}$. For example, as for university admission results, the class Y of -1 indicates a rejection and the class Y of +1 represents an approval. Further, if gender is adopted as the attribute, a group a represents a male and a group b represents a female.

The cluster generation unit 101 generates a cluster $C_{y,s}$ as a set of pieces of data that belong to a class y and a group s among the pieces of input training data 120 as data D. In other words, the cluster generation unit 101 generates a cluster by performing clustering on the pieces of input training data 120 based on the assumption that the cluster $C_{y,s}$ = $\{i|Y_i=y, S_i=s\}$. In the following descriptions, a set of the pieces of data D that belong to the class y may simply be denoted by $C_y = \{i|Y_i = y\}$. For example, a set of the pieces of data D that belong to the class Y of -1 is denoted by $C_{-1}$ and a set of the pieces of data that belong to the class Y of -1 and the group S of a is denoted by $C_{-1,a}$.

Further, the cluster generation unit 101 outputs information on the generated cluster and information on the input training data 120 belonging to each of the clusters to the determination unit 102.

The determination unit 102 receives input of the information on the cluster generated by the cluster generation unit 101 and the information on the input training data 120 belonging to each of the clusters from the cluster generation unit 101. Subsequently, the determination unit 102 identifies a cluster with a maximum size, that is, a cluster to which the largest number of pieces of input training data 120 belong.

The determination unit 102 stores therein, in advance, an imbalance threshold for determining whether an imbalance of sizes among the clusters is present. Further, the determination unit 102 calculates M that is a size of the cluster with the maximum size and m that is a size of a cluster with a minimum size by using Expressions (1) and (2) below based on the assumption that a size of the cluster $C_{y,x}$ is denoted by $|C_{y,x}|$.

$$M = \max_{y,s}|C_{y,s}| \qquad \cdots (1)$$

$$m = \min_{y,s}|C_{y,s}| \qquad \cdots (2)$$

Subsequently, the determination unit 102 divides m by M to calculate a ratio of m to M. Further, the determination unit 102 determines whether the calculated ratio is equal to or larger than the imbalance. Specifically, if the imbalance threshold is denoted by B, the determination unit 102 determines whether $m/M \geq B$. If the calculated ratio is equal to or larger than the imbalance threshold ($m/M \geq B$), the determination unit 102 determines that a balance of the sizes among the clusters is maintained, that is, the input training data 120 is not biased toward a certain class and a certain group. Further, the determination unit 102 outputs the input training data 120 as the training data to the training execution unit 105.

In contrast, if the calculated ratio is smaller than the imbalance threshold ($m/M < B$), the determination unit 102 determines that an imbalance of sizes among the clusters is present, that is, the input training data 120 is biased toward one or both of a certain class and a certain group. Further, the determination unit 102 outputs the information on each of the clusters and the input training data 120 belonging to each of the clusters to the cluster selection unit 103. Furthermore, the determination unit 102 outputs the information on the cluster with the maximum size and the information on the size of the cluster with the maximum size to the cluster selection unit 103.

Thereafter, the determination unit 102 receives, from the cluster selection unit 103, a notice of correction of the imbalance of sizes among the clusters, together with input of information on the synthetic data that is interpolated in each of the clusters. Further, the determination unit 102 generates the training data 122 by adding all pieces of the synthetic data that are interpolated in the data groups of the pieces of input training data 120, and outputs the training data 122 to the training execution unit 105.

The cluster selection unit 103 receives input of the information on each of the clusters and the input training data 120 that belongs to each of the clusters from the determination unit 102. Furthermore, the cluster selection unit 103 also receives input of the information on the cluster with the maximum size and the information on the size of the cluster with the maximum size from the determination unit 102. Moreover, the cluster selection unit 103 has the same imbalance threshold that is stored in the determination unit 102.

Subsequently, the cluster selection unit 103 selects one cluster from among the clusters except for the cluster with the maximum size. Further, the cluster selection unit 103 determines whether a ratio between the size of the selected cluster and the size of the cluster with the maximum size is equal to or larger than the imbalance threshold. If the ratio between the size of the selected cluster and the size of the cluster with the maximum size is equal to or larger than the imbalance threshold, the cluster selection unit 103 determines that interpolation of the training data is not needed in the selected cluster.

In contrast, if the ratio between the size of the selected cluster and the size of the cluster with the maximum size is smaller than the imbalance threshold, the cluster selection unit 103 determines that interpolation of the training data is needed in the selected cluster. Thereafter, the cluster selection unit 103 selects a next cluster and performs the same determination. The cluster selection unit 103 determines whether to perform interpolation of the training data with respect to all of the clusters except for the cluster with the maximum size.

Thereafter, the cluster selection unit 103 outputs the information on each of the clusters and the input training data 120 belonging to each of the clusters to the pair selection unit 104. Further, the cluster selection unit 103 selects a single cluster from among the clusters for which it is determined that the interpolation of the training data is to be performed, as an interpolation process target cluster. Then, the cluster selection unit 103 outputs information on the selected interpolation process target cluster to the pair selection unit 104.

Thereafter, the cluster selection unit 103 receives a notice of completion of an interpolation process on the interpolation process target cluster from the synthetic data generation unit 109. Further, the cluster selection unit 103 selects a single interpolation process target cluster from among unselected clusters among the clusters for which it is determined that the interpolation of the training data is to be performed, and outputs information on the interpolation process target cluster to the pair selection unit 104. If the interpolation process on all of the clusters for which it is determined that the interpolation of the training data is to be performed is completed, the cluster selection unit 103 outputs a notice of correction of an imbalance of sizes among the cluster and information on the synthetic data that is interpolated in each of the clusters to the determination unit 102.

The pair selection unit 104 receives input of the information on each of the clusters and the input training data 120 belonging to each of the clusters from the cluster selection unit 103. Further, the pair selection unit 104 receives input of information on the interpolation process target cluster from the cluster selection unit 103. Furthermore, the pair selection unit 104 performs a selection process of selecting a cluster that forms a pair for generating the synthetic data (as will be described below) with respect to the interpolation process target cluster.

The pair selection unit 104 determines whether to use, as a cluster that forms a pair, a cluster that belongs to a different class and the same group with respect to the interpolation process target cluster or a cluster that belongs to the same class and a different group with respect to the interpolation process target cluster. Specifically, the pair selection unit 104 calculates an average neighbor density that is defined by Expression (3) below, with respect to a point that belongs to the interpolation process target cluster.

$$\rho_+ = \mathbb{E}_{t \sim C_{y,s}}\left[\frac{\Delta_t(Y)}{K}\right] \qquad \cdots (3)$$

Further, the pair selection unit 104 calculates an average neighbor density that is defined by Expression (4) below with respect to a point in the same group and a different group other than the point that belongs to the interpolation process target cluster.

$$\rho_- = \mathbb{E}_{t \sim C_{\bar{y},s}}\left[\frac{\Delta_t(Y)}{K}\right], \bar{y} \neq y \qquad \cdots (4)$$

$\Delta_t(Y)$ in Expression (3) and Expression (4) represents the number of pieces of data in the same class among K-nearest neighbors of a point t that belongs to the cluster $C_{y,s}$. Further, $\Delta_t(Y)/K$ represents a neighbor density at the point t.

In other words, the neighbor density is information that indicates a degree of difficulty of classification of data in class classification. If the neighbor density of the point t is increased, the number of points with different classes is increased around the point t. In the case of a cluster that includes a large number of the points t with high neighbor densities, it is difficult to determine a class to which a point belonging to the cluster is to be classified. In contrast, if the neighbor density of the point t is low, the number of points with the same class is increased around the point t. In the case of a cluster that includes a large number of the points t with low neighbor densities, it is easy to determine a class to which a point belonging to the cluster is to be classified.

The K-nearest neighbor corresponds to an example of a "specific criterion". Further, data of the K-nearest neighbor of the data D that corresponds to the point t corresponds to an example of "neighbor training data for which a distance from the training data meets the specific criterion" with respect to the data D.

$\rho_+$ in Expression (3) represents an average neighbor density that is an average of neighbor densities, where the neighbor density is a ratio of the number of pieces of data in the same class as the point t among the K-nearest neighbors of each of the points t. In other words, if $\rho_+$ increases, the pieces of data D located nearby are more likely to belong to the same class with respect to a large number of pieces of data D among the pieces of data D in $C_{y,s}$, and it is assumed that the neighbors are dominated by the same class. Here, the K-nearest neighbors of the point t are K points located near the point t. K may be set to, for example, two, five, or the like.

Furthermore, $\rho_-$ in Expression (4) represents an average of ratios of the numbers of pieces of data in different classes among the K-nearest neighbors of the point t in the same group and a different class except for the cluster $C_{y,s}$. In other words, if $\rho_-$ increases, the pieces of data D located nearby are more likely to belong to the same group with respect to a large number of pieces of data D among the pieces of data D that belong to the same group and different classes except for the cluster $C_{y,s}$, and it is assumed that the neighbors are dominated by the same group.

Therefore, the pair selection unit 104 calculates a parameter p for performing correction in accordance with the neighbor density by using $\rho_+$ and $\rho_-$ by Expression (5) below.

$$p = \frac{\rho_+}{\rho_+ + \rho_-} \qquad \cdots (5)$$

Further, the pair selection unit 104 determines whether a trial of current interpolation meets a condition (True) or does not meet the condition (other than True) in accordance with the Bernoulli distribution while adopting the parameter p as a probability. If the trial meets the condition, the pair selection unit 104 determines that a cluster that forms a pair used for the interpolation of the training data in the interpolation process target cluster is to be selected from among clusters that belong to different classes and the same group. In contrast, if the trial does not meet the condition, the pair selection unit 104 determines that a cluster that forms a pair used for the interpolation of the training data in the interpolation process target cluster is to be selected from among clusters that belong to the same class and different groups.

In the present embodiment, the interpolation of the training data is performed by using interpolation, and in the following, interpolation of training data using the clusters that belong to different classes and the same group will be referred to as inter-class interpolation. Further, interpolation of training data using clusters that belong to the same class and different groups will be referred to as inter-group interpolation. In other words, the pair selection unit 104 determines whether to perform the inter-class interpolation or the inter-group interpolation by using the parameter p that represents the probability for performing the inter-class interpolation in accordance with the neighbor density. In the following, the parameter p may be referred to as an "inter-class interpolation probability".

As described above, the pair selection unit 104 takes into account a lower neighbor density between clusters that belong to the same group and different classes by using the inter-class interpolation probability. Further, a cluster with a lower neighbor density can be translated as a cluster for which classification is difficult, and therefore, the pair selection unit 104 increases the number of times of performance of the inter-class interpolation so as to effectively increase the neighbor density with respect to a cluster with a lower neighbor density. In contrast, the pair selection unit 104 increases the number of times of performance of the inter-group interpolation with respect to a cluster with a higher neighbor density.

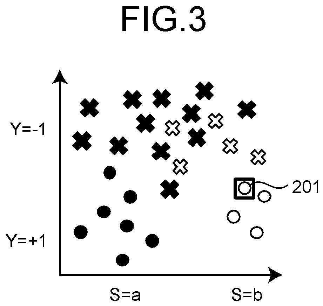

FIG. 3 is a diagram for explaining selection of the inter-class interpolation or the inter-group interpolation by the pair selection unit. In FIG. 3, white circles represent points that belong to the class Y of +1 and the group S of b. Further, black circles represent points that belong to the class Y of +1 and the group S of a. Furthermore, white crosses represent points that belong to the class Y of -1 and the group S of b. Moreover, black crosses represent points that belong to the class Y of -1 and the group S of a.

Here, a case in which K = 3 as K-nearest neighbors of a point i will be described. Further, a case in which the interpolation of the training data is performed for the cluster to which the white circles belong will be explained. For example, with respect to a point 201, two points among three points as the K-nearest neighbors belong to the same class and one point belongs to a different class. Therefore, the pair selection unit 104 calculates 2/3 as a neighbor density of the point 201.

In this manner, the pair selection unit 104 calculates the neighbor density of each of the points and obtains an average neighbor density such that the average neighbor density of the cluster to which the white circles belong is 1/4 (3/3 + 3/3 + 2/3 + 2/3) = 10/12. Similarly, the pair selection unit 104 calculates the average neighbor density of the white crosses that are the points belonging to the same group and different classes with respect to the cluster to which the white circles belong as 1/5 (3/3 + 3/3 + 3/3 + 3/3 + 1/3) = 13/15. Therefore, if oversampling is performed with respect to the white circles, the pair selection unit 104 determines that the inter-class interpolation is to be performed in accordance with the Bernoulli distribution with the probability of p = 10/12/(10/12 + 13/15) = 0.49 as an inter-class interpolation probability.

Here, a plurality of pieces of data that belong to the interpolation process target cluster correspond to an example of "a first plurality of pieces of training data". Further, a plurality of pieces of data of a cluster that forms a pair when the inter-class interpolation is performed correspond to "a second plurality of pieces of training data". Furthermore, a plurality of pieces of data of a cluster that forms a pair when the inter-class interpolation is to be performed correspond to "a third plurality of pieces of training data". Moreover, the inter-class interpolation probability corresponds to an example of a "specific probability".

In other words, the pair selection unit 104 an instruction for identifies from among the plurality of pieces of training data, a plurality of pieces of neighbor training data for which distances from the second training data meet a specific criterion, and determines the specific probability based on number of pieces of training data having the labels of the first values among the plurality of pieces of neighbor training data. More specifically, the pair selection unit 104 identifies, from among the plurality of pieces of training data, a plurality of pieces of first neighbor training data for which distances from the first plurality of pieces of training data meet the specific criterion, identifies, from among the plurality of pieces of training data, a plurality of pieces of second neighbor training data for which distances from the second plurality of pieces of training data meet the specific criterion, and determines the specific probability based on number of pieces of training data having the labels of the first values among the plurality of pieces of first neighbor training data and based on number of pieces of training data having the labels of the first values among the plurality of pieces of second neighbor training data.

Subsequently, the pair selection unit 104 notifies the first sample selection unit 107 of information on the interpolation process target cluster. Further, the pair selection unit 104 notifies the second sample selection unit 106 of information on the inter-class interpolation or the inter-group interpolation that is to be performed on the interpolation process target cluster.

Thereafter, the pair selection unit 104 acquires synthetic data for interpolation of the training data in the interpolation process target cluster, where the synthetic data is generated by the synthetic data generation unit 109, from the synthetic data generation unit 109. Further, the pair selection unit 104 repeatedly selects a cluster that forms a pair, while adding the newly-added synthetic data to the data in the interpolation process target cluster.

Here, in the present embodiment, the pair selection unit 104 calculates the inter-class interpolation probability by using the neighbor density of the interpolation process target cluster and the neighbor density of the point belonging to a different class and the same group with respect to the interpolation process target cluster, but it may be possible to use the inter-class interpolation probability that is a set value that is determined in advance.

The first sample selection unit 107 receives input of the information on the interpolation process target cluster from the pair selection unit 104. Further, the first sample selection unit 107 selects a single piece of data $D = (X_i, Y_i, S_i)$ that belongs to the cluster $C_{y,s}$ as the interpolation process target cluster. In the following, the selected data $D = (X_i, Y_i, S_i)$ will be referred to as the point i. Further, the first sample selection unit 107 outputs information on the selected point i to the synthetic data generation unit 109. The data D that is selected by the first sample selection unit 107 corresponds to the "second training data".

The second sample selection unit 106 receives input of the information on the inter-class interpolation or the inter-group interpolation that is to be performed on the interpolation process target cluster from the pair selection unit 104. Further, if the inter-class interpolation is to be performed, the second sample selection unit 106 selects a single piece of $D = (X_j, Y_j, S_j)$ that belongs to a cluster that is in a different class and the same group with respect to the interpolation process target cluster.

In this case, the second sample selection unit 106 selects a point j in accordance with a probability $Q_Y$ with respect to each of points j, which is calculated by Expression (6) below, in order to improve accuracy of classification of a point for which classification may be difficult, that is, a point for which the number of other neighbor points belonging to the same class is small.

$$Q_Y = 1 - \frac{\Delta_j(Y)}{\sum_j \Delta_j(Y)} \qquad \cdots (6)$$

Here, $\Delta_j(Y)$ represents the number of pieces of data in the same class among K-nearest neighbors of the point j. Further, the second term on the right side of Expression (5) represents a ratio of points in the same class among the K-nearest neighbors of the point j with respect to a total number of points in the same class among K-nearest neighbors of all of points in the cluster in which the point j is selected, that is, a ratio of the number of the same classes as the point j to the total number. In other words, with an increase in $Q_Y$, a position is located closer to a boundary between classes, and therefore, the second sample selection unit 106 selects the point j in accordance with $Q_Y$ in order to increase the probability that the point j located closer to the boundary between the classes is selected. In the following, $Q_Y$ may be referred to as an "inter-class interpolation point selection probability".

Furthermore, if the inter-group interpolation is to be performed, the second sample selection unit 106 selects a single piece of data $D = (X_j, Y_j, S_j)$ that belongs to a cluster as a set of the pieces of data D belonging to the same class and a different group with respect to the interpolation process target cluster. In the following, the selected data D = $(X_j, Y_j, S_j)$ will be referred to as the point j.

In this case, the second sample selection unit 106 selects the point j in accordance with a probability $Q_S$ with respect to each of the points j, which is calculated by Expression (7) below, in order to improve accuracy of classification of a point for which classification may be difficult, that is, a point for which the number of other neighbor points belonging to the same class is small. With an increase in $Q_S$, a position is located closer to a boundary between classes, and therefore, the second sample selection unit 106 selects the point j in accordance with Qs in order to increase the probability that the point j located closer to the boundary between the classes is selected. In the following, $Q_S$ may be referred to as an "inter-group interpolation selection probability".

$$Q_S = 1 - \frac{\Delta_j(Y)}{\sum_j \Delta_j(Y)} \qquad \cdots (7)$$

However, if two or more groups are present as candidates for a pair, the second sample selection unit 106 may perform reciprocal sampling from each of the groups so as to prevent samples from being biased toward a specific group. In this case, the second sample selection unit 106 selects the point j in accordance with the inter-group interpolation point selection probability that is calculated by, for example, Expression (8) below.

$$Q_S = \frac{\frac{1}{|c_{y,s}|^\gamma}}{\sum_{s \in S} \frac{1}{|c_{y,s}|^\gamma}} \cdot \gamma \qquad \cdots (8)$$

Here, $\gamma$ represents a hyperparameter. The second sample selection unit 106 performs uniform sampling when $\gamma = 0$. If $\gamma > 0$, the second sample selection unit 106 acquires the point j from a minority group among pair candidate groups. Further, if $\gamma < 0$, the second sample selection unit 106 acquires the point j from a majority group.

In other words, the second sample selection unit 106 selects data that is used for interpolation, in accordance with determination on whether to perform the inter-class interpolation based on the inter-class interpolation probability. This process corresponds to an example of a process of "selecting first training data from among the second plurality of pieces of training data or the third plurality of pieces of training data based on a specific probability". In other words, the data D that is selected by the second sample selection unit 106 corresponds to the "first training data".

The weight calculation unit 110 calculates a weight that is used for the interpolation. In this case, when the interpolation is performed between the point i and the point j, and if the synthetic data is randomly generated by a uniform distribution in the entire range between the point i and the point j, unnatural synthetic data is generated. Therefore, to generate natural synthetic data, the weight calculation unit 110 calculates the weight, which is used to generate the synthetic data, while taking into account a distance of a neighbor point with respect to the point i.

Specifically, the weight calculation unit 110 calculates a value that is used to determine the weight by using a neighbor distance function $d_i$ for the point i as represented by Expression (9) below.

$$d_i = \Delta_i(Y)/K \times \bar{d_i} \qquad \cdots (9)$$

The last item on the right side of Expression (9) represents an average of distances between the point i and K-nearest neighbors of the point i. Further, $\Delta_i(Y)/K$ is a neighbor density. Furthermore, the weight calculation unit 110 randomly determines a value in accordance with a uniform distribution between the calculated value and zero and adopts the value as the weight that is used for the interpolation.

In this manner, the weight calculation unit 110 is able to perform interpolation while taking into account distances between the point i and the neighbor points by using an average of the distances between the point i and a predetermined number of the neighbor points of the point i. Further, the weight calculation unit 110 prevents overlapping among the classes by using the neighbor density. Thereafter, the weight calculation unit 110 outputs the determined weight, which is used for the interpolation, to the synthetic data generation unit 109.

Here, in the present embodiment, the weight calculation unit 110 calculates the weight, which is used for the interpolation, on the basis of the distances between the K-nearest neighbors and a certain point that belongs to the interpolation process target cluster, but embodiments are not limited to this example, and it may be possible to use a weight that is a set value that is determined in advance.

The synthetic data generation unit 109 acquires information on the point i from the first sample selection unit 107. Further, the synthetic data generation unit 109 acquires information on the point j from the second sample selection unit 106. Furthermore, the synthetic data generation unit 109 acquires information on the weight used for the interpolation from the weight calculation unit 110.

Moreover, the synthetic data generation unit 109 generates the synthetic data by selecting an interpolation point between the point i and the point j based on the acquired weight. In other words, the synthetic data generation unit 109 generates, as the synthetic data, data $D' = (X_i', Y_i', S_i')$. Here, assuming that the weight used for the interpolation is denoted by w, $X_i' = X_i + w (X_j - X_i)$. Further, $Y_i' = Y_i$ and $S_i' = S_i$.

The synthetic data generation unit 109 counts a total number of pieces of the synthetic data generated for the interpolation process target cluster. Further, a total number of pieces of data is calculated by adding the total number of pieces of the generated synthetic data to the number of pieces of the input training data 120 in the interpolation process target cluster. Here, the synthetic data generation unit 109 has the same imbalance threshold as the imbalance threshold that is stored in the determination unit 102.

Subsequently, the synthetic data generation unit 109 determines whether a ratio of the calculated total number of pieces of data and the size of the cluster with the maximum size is equal to or larger than the imbalance threshold. If the ratio of the calculated total number of pieces of data and the size of the cluster with the maximum size is smaller than the imbalance threshold, the synthetic data generation unit 109 outputs information on the generated synthetic data to the pair selection unit 104. In contrast, if the ratio of the calculated total number of pieces of data and the size of the cluster with the maximum size is equal to or larger than the imbalance threshold, the synthetic data generation unit 109 notifies the cluster selection unit 103 of completion of the interpolation process on the interpolation process target cluster.

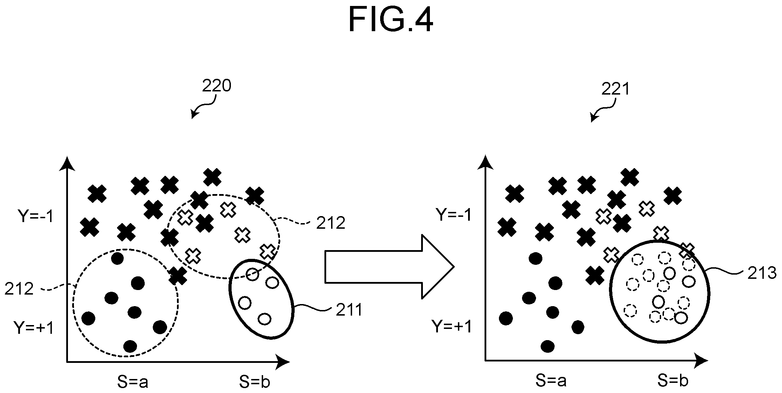

FIG. 4 is a diagram illustrating an example of a training data interpolation process performed by the control unit according to the first embodiment. An example of the training data interpolation process performed by the control unit 10 according to the first embodiment will be described with reference to FIG. 4. In each of graphs 220 and 221 in FIG. 4, a vertical axis represents a class and a horizontal axis represents a group.

The graph 220 in FIG. 4 is a graph that represents the pieces of input training data 120 that are not yet subjected to the training data interpolation process. The graph 221 is a graph that represents the pieces of input training data 120 that are subjected to the training data interpolation process. In each of the graphs 220 and 221, the vertical axis represents a class and the horizontal axis represents a group.

In FIG. 4, a cluster 211 in the class Y of +1 and the group S of b is the interpolation process target cluster. Further, a cluster 213 is a cluster that is in the same class and a different group with respect to the cluster 211.

The pair selection unit 104 calculates the inter-class interpolation probability from the neighbor densities of the pieces of input training data 120 belonging to the cluster 211 and the neighbor densities of the pieces of input training data 120 belonging to a cluster 212. Further, the pair selection unit 104 selects a cluster that forms a pair when interpolation is performed, in accordance with the calculated inter-class interpolation probability. As illustrated in the graph 220, the neighbor density of the cluster 211 is lower than the neighbor density of the cluster 212, and therefore, the pair selection unit 104 performs interpolation while increasing the number of times of the inter-class interpolation on the cluster 211.

With this configuration, with respect to the cluster 211, the synthetic data generation unit 109 generates a large number of pieces of synthetic data for the cluster 212. By increasing the number of pieces of the synthetic data as described above, the cluster 211 becomes a cluster 224 in the graph 221, so that it is possible to appropriately perform data interpolation with a natural tendency while preventing overfitting, and it is possible to improve a trade-off between accuracy and fairness.

Referring back to FIG. 1, if an imbalance of sizes among the clusters is present, the training execution unit 105 acquires the training data 122, which is obtained by adding the synthetic data to a data group of the input training data 120, from the determination unit 102. Further, if a balance of sizes among the clusters is maintained, the training execution unit 105 acquires the data group of the input training data 120 as the training data 122 from the determination unit 102.

Further, the training execution unit 105 inputs the acquired training data 122 to the machine learning model 11. Furthermore, the training execution unit 105 compares output data from the machine learning model 11 and each of classes of the pieces of training data 122, updates the hyperparameter based on a comparison result, and performs training of the machine learning model 11.

The prediction unit 108 receives input of the test data 121 from the input-output control unit 12. Subsequently, the prediction unit 108 inputs the test data 121 to the trained machine learning model 11. Thereafter, the prediction unit 108 compares teacher data of the test data 121 and the output data from the machine learning model 11, and evaluates prediction accuracy of the trained machine learning model 11. Further, the prediction unit 108 transmits an evaluation result to the terminal device 2 via the input-output control unit 12.

Furthermore, the prediction unit 108 receives input of prediction target data for which a class is not clarified from the terminal device 2. Moreover, the prediction unit 108 inputs the prediction target data to the trained machine learning model 11 and obtains an output that is a prediction result. Thereafter, the prediction unit 108 transmits the prediction result of the prediction target data to the terminal device 2 via the input-output control unit 12.

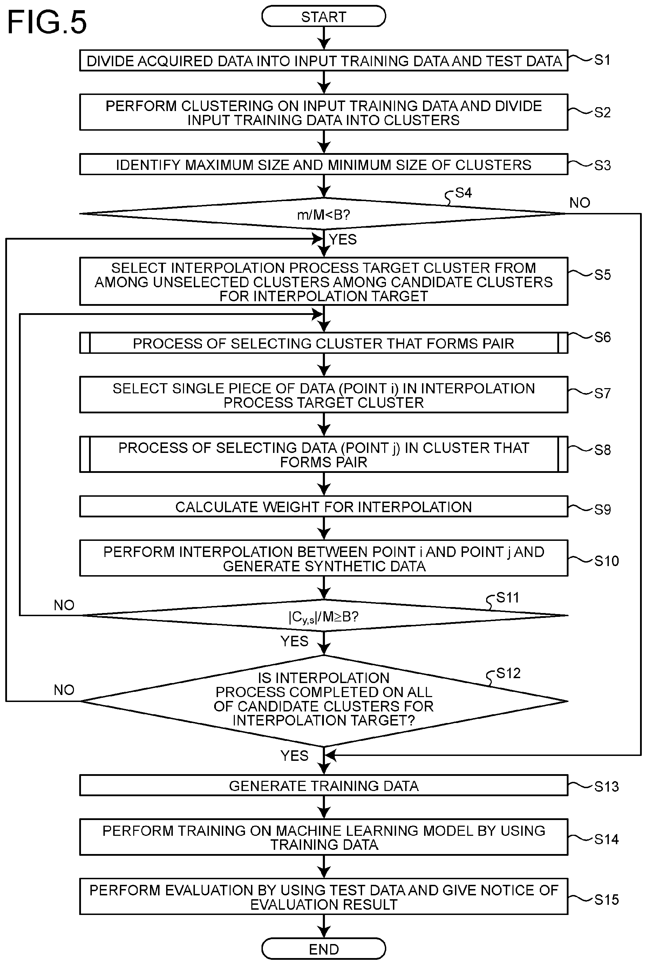

FIG. 5 is a flowchart of the machine learning process performed by the information processing apparatus according to the embodiment. The flow of the machine learning process performed by the information processing apparatus 1 according to the embodiment will be described below with reference to FIG. 5.

The input-output control unit 12 acquires input of the data 20 from the terminal device 2. Further, the input-output control unit 12 divides the data 20 into the input training data 120 and the test data 121 (Step S1).

The cluster generation unit 101 performs clustering on the input training data 120 based on classes and groups, and divide the input training data into clusters for each of combinations of the classes and the groups (Step S2).

The determination unit 102 identifies a size of a cluster with a maximum size and a size of a cluster with a minimum size, that is, the maximum size and the minimum size of the clusters, among the clusters that are generated by the cluster generation unit 101 (Step S3).

Subsequently, the determination unit 102 calculates a ratio between the maximum size and the minimum size of the clusters, and determines whether the ratio is smaller than the imbalance threshold that is determined in advance. In other words, assuming that the minimum size is denoted by m, the maximum size is denoted by M, and the imbalance threshold is denoted by B, the determination unit 102 determines whether $m/M < B$ (Step S4). If the ratio between the minimum size and the maximum size of the clusters is calculated and the ratio is equal to or larger than the imbalance threshold that is determined in advance (Step S4: NO), the determination unit 102 determines that a balance of sizes among the clusters is maintained, and the process goes to Step S13.

In contrast, if the ratio of the minimum size and the maximum size of the clusters is calculated and the ratio is smaller than the imbalance threshold (Step S4: YES), the determination unit 102 determines that an imbalance of sizes among the clusters is present, and outputs information on each of the clusters to the cluster selection unit 103. The cluster selection unit 103 calculates a size of each of the clusters, calculates a ratio of the calculated size to the maximum size of the clusters, and extracts clusters for which the calculated ratio is smaller than the imbalance threshold as candidate clusters for an interpolation target. Further, the cluster selection unit 103 selects a single interpolation process target cluster from among unselected clusters among the candidate clusters for interpolation target (Step S5).

The pair selection unit 104 performs a process of selecting a cluster that forms a pair for generation of the synthetic data by performing interpolation, with respect to the interpolation process target cluster that is selected by the cluster selection unit 103, and selects a cluster that forms a pair (Step S6).

The first sample selection unit 107 selects a single piece of data that belongs to the interpolation process target cluster (Step S7). Here, data of the interpolation process target cluster that is selected by the first sample selection unit 107 will be referred to as the point i.

The second sample selection unit 106 performs a data selection process in the cluster that forms a pair, and selects a single piece of data that belongs to the cluster that forms a pair (Step S8). Here, data that is selected by the second sample selection unit 106 and that belongs to the cluster that forms a pair will be referred to as the point j.

Subsequently, the weight calculation unit 110 calculates an average of distances between each of the points and K-nearest neighbors and the neighbor density of the interpolation process target cluster, and calculates a value that is to be assigned to the neighbor distance function $d_i$ and that is used to determine a weight. Further, the weight calculation unit 110 randomly determines a value in accordance with a uniform distribution between the calculated value and zero and determines the weight that is used for interpolation (Step S9).

The synthetic data generation unit 109 performs interpolation between the point i and the point j by using the weight that is calculated by the weight calculation unit 110, and generates synthetic data (Step S10).

Thereafter, the synthetic data generation unit 109 determines whether a ratio between a size of the interpolation process target cluster to which the generated synthetic data is added and the maximum size of the clusters is equal to or larger than the imbalance threshold. In other words, assuming that the size of the interpolation process target cluster to which the generated synthetic data is added is denoted by $|C_{y,s}|$, the synthetic data generation unit 109 determines whether $|C_{y,s}|/M \geq B$ (Step S11). If the ratio between the size of the interpolation process target cluster and the maximum size of the clusters is smaller than the imbalance threshold (Step S11: NO), the machine learning process returns to Step S6.

In contrast, if the ratio between the size of the interpolation process target cluster and the maximum size of the clusters is equal to or larger than the imbalance threshold (Step S11: YES), the synthetic data generation unit 109 notifies the cluster selection unit 103 of completion of the interpolation process on the interpolation process target cluster performed by the training data 122. Further, the cluster selection unit 103 determines whether the interpolation process is completed on all of the candidate clusters for the interpolation target (Step S12). If a cluster for which the interpolation process is not yet completed remains among the candidate clusters for the interpolation target (Step S12: NO), the machine learning process returns to Step S5.

In contrast, if the interpolation process is completed on all of the candidate clusters for the interpolation target (Step S12: YES), the cluster selection unit 103 outputs the synthetic data that is generated for each of the candidate clusters for the interpolation target to the determination unit 102. Further, if it is determined that an imbalance of sizes among the clusters is present and input of the synthetic data is received, the determination unit 102 generates the training data 122 by adding the synthetic data to the input training data 120. Furthermore, if it is determined that a balance of sizes among the clusters is maintained, the determination unit 102 generates the training data 122 by adopting the input training data 120 as the training data 122 (Step S13).

The training execution unit 105 performs training on the machine learning model 11 by using the training data 122 that is acquired from the determination unit 102 (Step S14).

After training is completed, the prediction unit 108 evaluates prediction accuracy of the trained machine learning model 11 by using the test data 121. Thereafter, the prediction unit 108 transmits an evaluation result to the terminal device 2 to give a notice to the user (Step S15).

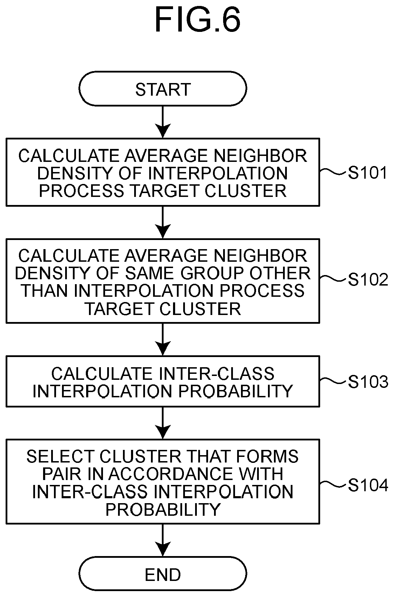

FIG. 6 is a flowchart of the process of selecting a cluster that forms a pair according to the first embodiment. The process illustrated in the flowchart in FIG. 6 corresponds to an example of the process that is performed at Step S6 in FIG. 5. The flow of the process of selecting a cluster that forms a pair according to the first embodiment will be described below with reference to FIG. 6.

The pair selection unit 104 calculates the neighbor density of each of the points in the interpolation process target cluster, and calculates an average neighbor density of the interpolation process target cluster by using Expression (3) (Step S101).

The pair selection unit 104 calculates the neighbor density of each of the points in the same group other than the interpolation process target cluster, and calculates an average neighbor density of the same group other than the interpolation process target cluster by using Expression (4) (Step S102).

Furthermore, the pair selection unit 104 calculates the inter-class interpolation probability by Expression (5) by using the average neighbor density of the interpolation process target cluster and the average neighbor density of the same group other than the interpolation process target cluster (Step S103).

Thereafter, the pair selection unit 104 determines whether to perform the inter-class interpolation or the inter-group interpolation in accordance with the inter-class interpolation probability, and selects a cluster that forms a pair in accordance with the determination (Step S104).

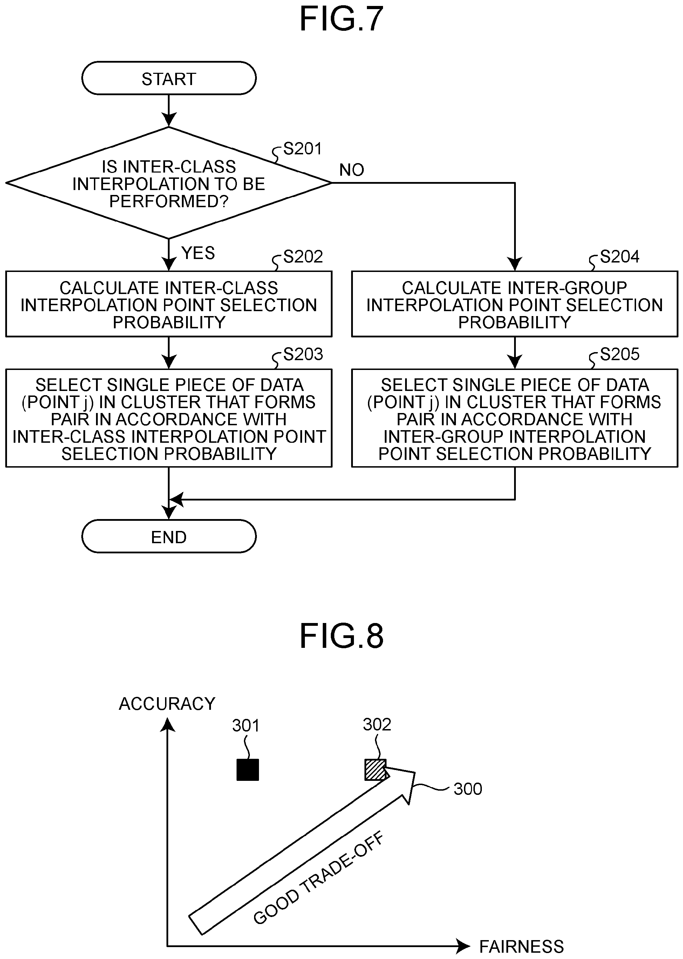

FIG. 7 is a flowchart of the data selection process in the cluster that forms a pair. The process illustrated in the flowchart in FIG. 7 corresponds to an example of the process performed at Step S8 in FIG. 5. The flow of the data selection process in the cluster that forms a pair will be described below with reference to FIG. 7.

The first sample selection unit 107 determines whether the pair selection unit 104 performs the inter-class interpolation (Step S201).

If the inter-class interpolation is to be performed (Step S201: YES), the second sample selection unit 106 calculates the number of pieces of data in the same class among the K-nearest neighbors of each of the points in the cluster that forms a pair, and calculates the inter-class interpolation point selection probability for each of the points by using Expression (6) (Step S202).

Thereafter, the second sample selection unit 106 selects a single piece of data that belongs to the cluster that forms a pair in accordance with the inter-class interpolation point selection probability of each of the points (Step S203). The point that is selected by the second sample selection unit 106 is the point j.

In contrast, if the inter-group interpolation is to be performed (Step S201: NO), the second sample selection unit 106 calculates the number of pieces of data in the same class among the K-nearest neighbors of each of the points in the cluster of the same group other than the interpolation process target cluster. Further, the second sample selection unit 106 calculates the inter-group interpolation point selection probability of each of the points by using Expression (7) and Expression (8) (Step S204).

Thereafter, the second sample selection unit 106 selects a single piece of data that belongs to the cluster that forms a pair in accordance with the inter-group interpolation point selection probability of each of the points (Step S205). The point that is selected by the second sample selection unit 106 is the point j.

As described above, the information processing apparatus according to the present embodiment determines, with use of the neighbor density that represents a ratio of pieces of data in a different class located nearby, whether to perform the inter-class interpolation or the inter-group interpolation and determines a cluster that forms a pair when the interpolation is performed. Specifically, the information processing apparatus increase the probability that the inter-class interpolation is to be performed with a decrease in the neighbor density. Further, the information processing apparatus selects a point while increasing the probability that data located close to a boundary between cluster is selected when selecting a point used for interpolation from the cluster that forms a pair. Furthermore, the information processing apparatus determines a weight for interpolation while taking into account a distance of a neighbor point from a certain point that is selected from the interpolation process target cluster. Moreover, the information processing apparatus performs interpolation between the point selected from the interpolation process target cluster and the point selected from the cluster that forms a pair in accordance with the weight, and generates the synthetic data. Furthermore, the information processing apparatus repeatedly generates the synthetic data, and eliminates the imbalance of sizes among the clusters.

By determining whether to perform the inter-class interpolation by using the neighbor density, it is possible to give priority to interpolation that increases the prediction accuracy with respect to a cluster that is difficult to be classified, and give priority to interpolation that increases the fairness with respect to a cluster that can easily be classified. Further, by increasing the probability that data located close to the boundary between classes is selected in the cluster that forms a pair, it is possible to further increase the prediction accuracy. Furthermore, by performing interpolation by using the weight that is determined by taking into account a distance between a certain point and a neighbor point in the interpolation process target cluster, it is possible to perform interpolation while taking into account a distance scale with respect to a neighbor, so that it is possible to generate natural synthetic data in accordance with a data distribution. Therefore, it is possible to implement appropriate oversampling in accordance with a data distribution, improve a trade-off between the prediction accuracy and the fairness, improve the prediction accuracy, and ensure the fairness.

Meanwhile, as a countermeasure against a problem, such as overfitting, it may be possible to perform oversampling while taking into account extrapolation with respect to a pair of pieces of training data. However, it is difficult to generate data based on the extrapolation due to reasons as described below. One of the reasons is that the extrapolation is performed based on the assumption that the tendency of the training data continues along an extended line of the pair, but in general, this process does not usually come into effect, so that synthetic data based on an unnatural tendency may be generated. Furthermore, the synthetic data based on the unnatural tendency is not likely to data that effectively contributes to the machine learning model. Thus, it is difficult to appropriately take into account an unobserved range by the extrapolation. Consequently, it is difficult to improve a trade-off between the prediction accuracy and the fairness by using the extrapolation.

FIG. 8 is a diagram illustrating improvement of a trade-off between the prediction accuracy and the fairness by the machine learning model according to the embodiment. In FIG. 8, a vertical axis represents the prediction accuracy and a horizontal axis represents the fairness. An arrow 300 in FIG. 8 represents a good trade-off between the prediction accuracy and the fairness. It is assumed that the trade-off between the prediction accuracy and the fairness is more appropriately performed with approach to the arrow 300.

If conventional oversampling is performed in which determination on whether to perform the inter-class interpolation using the neighbor density is not performed, in which acquisition of data from the vicinity of the boundary between classes in the cluster that forms a pair is not performed, and in which interpolation with the weight taken into account is not performed, the prediction accuracy increases, but it is difficult to ensure the fairness. For example, if the machine learning model 11 that is trained by performing the conventional oversampling is used, an evaluation result of the prediction is located away from the arrow 300 as indicated by a point 301.

In contrast, if the information processing apparatus according to the present embodiment is used, an evaluation result of the prediction is located at a position of a point 302. In other words, it can be understood that the point 302 increases the fairness as compared to the machine learning process using the conventional oversampling. Further, the point 302 is located closer to the arrow 300 than the point 301, so that the trade-off is improved.

(b) Second Embodiment

A second embodiment will be described below. The information processing apparatus 1 according to the present embodiment is also represented by the block diagram in FIG. 1. The information processing apparatus 1 according to the present embodiment is different from the first embodiment in terms of a strategy for determination on whether to perform the inter-class interpolation or the inter-group interpolation. In the following descriptions, explanation of operation of the same units as those of the first embodiment will be omitted.

The pair selection unit 104 according to the present embodiment performs a process of selecting a cluster that forms a pair for generating synthetic data as will be described below, with respect to the interpolation process target cluster. The pair selection unit 104 determines, similarly to the first embodiment, as a cluster that forms a pair, whether to use a cluster that belongs to a different class and the same group with respect to the interpolation process target cluster or a cluster that belongs to the same class and a different group with respect to the interpolation process target cluster. Specifically, the pair selection unit 104 calculates the number of points located at a boundary between classes, which is defined by Expression (10) below, with respect to a point that belongs to the interpolation process target cluster.

$$\rho_{y,s} = \sum_{t \in C_{y,s}} \mathbb{1}[0 < \Delta_t(Y) \le {K}/{2}] \qquad \cdots (10)$$

$\Delta_t(Y)$ represents the number of pieces of data in the same class among K-nearest neighbors of a point t that belongs to the cluster $C_{y,s}$. Further, $\mathbb{1}[0 < \Delta_t(Y)K/2]$ represents a point that is located at the boundary between the classes among the K-nearest neighbors of a point t that belongs to the cluster $C_{y,s}$. In other words, $\rho_{y,s}$ represents the number of points located at the boundary between the classes among the K-nearest neighbors of a point t that belongs to the cluster $C_{y,s}$. The number of points located at the boundary between the classes corresponds to an example of "identifying, from among the plurality of pieces of training data, a plurality of pieces of first neighbor training data for which distances from the first plurality of pieces of training data meet the specific criterion and based on number of pieces of data located at a boundary with data having the label of the fourth value among the pieces of training data having the labels of the first values included in the pieces of the first neighbor training data".

Similarly, the pair selection unit 104 calculates the number of points located at the boundary between the classes with respect to points that belongs to a different class and the same group other than the points included in the interpolation process target cluster. The number of points located at the boundary between the classes corresponds to an example of "identifying, from among the plurality of pieces of training data, a plurality of pieces of second neighbor training data for which distances from the third plurality of pieces of training data meet the specific criterion and based on number of pieces of data located at a boundary with data having the label of the first value among the pieces of training data having the labels of the fourth values included in the second neighbor training data".

Furthermore, the pair selection unit 104 similarly calculates the number of points located at the boundary between the classes, with respect to a different group. In other words, the pair selection unit 104 calculates the number of points located at the boundary between the classes with respect to a point that belongs to a cluster in the same class and a different group with respect to the interpolation process target cluster. The number of points located at the boundary between the classes corresponds to an example of "identifying, from among the plurality of pieces of training data, a plurality of pieces of third neighbor training data for which distances from the second plurality of pieces of training data meet the specific criterion and based on number of pieces of data located at a boundary with data having the label of the fourth value among the pieces of training data having the labels of the first values included in the third neighbor training data". In the following, the cluster in the same class and a different group with respect to the interpolation process target cluster will be referred to as a comparison target cluster.

Furthermore, the pair selection unit 104 calculates the number of points located at the boundary between the classes for a point in a different class and the same group with respect to the comparison target cluster. The number of points located at the boundary between the classes corresponds to an example of "identifying, from among the plurality of pieces of training data, a plurality of pieces of fourth neighbor training data for which distances from a fourth plurality of piece of training data having the labels of the fourth values and the first attributes of the third values meet the specific criterion and based on number of pieces of data located at a boundary with data having the label of the first value among the pieces of training data having the labels of the fourth values included in the fourth neighbor training data".

Furthermore, the pair selection unit 104 calculates a neighborhood disparity by using Expression (11).

$$\frac{\rho_{y,s}}{\rho_{\bar{y},s}} - \frac{\rho_{y,\bar{s}}}{\rho_{\bar{y},\bar{s}}} \qquad \cdots (11)$$

The first term of Expression (11) represents a ratio between the number of points located at a boundary between classes in the interpolation process target cluster and the number of points located at a boundary between classes in a cluster that belongs to a different class and the same group with respect to the interpolation process target cluster. Further, the second term of Expression (11) represents a ratio between the number of points located at the boundary between classes in a cluster that belongs to the same class and a different group with respect to the comparison target cluster and the number of points located at the boundary between classes in a cluster that belongs to a different class and the same group with respect to the comparison target cluster.

Here, a strategy for selecting the cluster that forms a pair performed by the pair selection unit 104 according to the present embodiment is basically the same as the strategy for selecting the cluster that forms a pair in the first embodiment. In other words, the pair selection unit 104 performs the inter-class interpolation to effectively increase the neighbor density with respect to a cluster with a lower neighbor density, and performs the inter-group interpolation with respect to a cluster with a higher neighbor density. However, the pair selection unit 104 according to the present embodiment takes a strategy in which the neighbor density of all of the clusters is taken into account. In other words, the pair selection unit 104 examines a lower neighbor density between clusters in the same group and different classes by using a ratio between the neighbor densities. Subsequently, the pair selection unit 104 calculates the ratio with respect to clusters in other groups. Lastly, the pair selection unit 104 calculates a difference between the ratios and calculates the neighborhood disparity.

The neighborhood disparity is a value that represents whether the ratio of the neighbor density in a certain group of the interpolation process target cluster is relatively high or low as compared to the ratio of the neighbor density of a cluster that belongs to a different group and the same class. In other words, the ratio of the neighbor density is relatively low as compared to a different group with an increase in the neighborhood disparity, and the ratio of the neighbor density is relatively high as compared to a different group with a decrease in the neighborhood disparity. The pair selection unit 104 adjusts the probability of the inter-class interpolation so as to decrease the neighborhood disparity.

To cope with this, the pair selection unit 104 calculates a parameter p that represents the inter-class interpolation probability by using the neighborhood disparity and Expression (12) below.

$$p = \left( \frac{\rho_{y,s}}{\rho_{\bar{y},\bar{s}}} \times \rho_{\bar{y},s} - \rho_{y,s} \right) / (M - |C_{y,s}|) \qquad \cdots (12)$$

A numerator of Expression (12) represents a ratio of the number of samples that are used to correct the neighborhood disparity between groups obtained from the neighborhood disparity. Further, Expression (12) represents a value that is obtained by dividing the ratio of the number of samples used to correct the neighborhood disparity between the groups obtained from the neighborhood disparity by the number of times of oversampling performed on the cluster.

Further, the pair selection unit 104 determines whether a trial of the current interpolation meets a condition (True) or does not meet the condition (not True) in accordance with the Bernoulli distribution while adopting the parameter p as a probability. If the trial meets the condition, the pair selection unit 104 determines that the inter-class interpolation is to be performed. In contrast, if the trial does not meet the condition, the pair selection unit 104 determines that the inter-group interpolation is to be performed. Accordingly, the pair selection unit 104 performs a larger number of times of the inter-class interpolation with respect to a cluster with a lower neighbor density in each of the groups, and performs a larger number of times of the inter-group interpolation with respect to a cluster with a higher neighbor density in each of the groups.

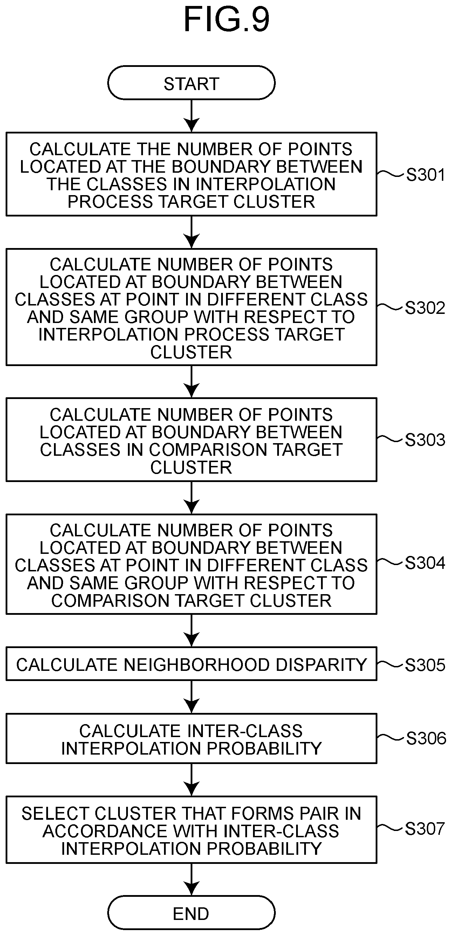

FIG. 9 is a flowchart of a process of selecting a cluster that forms a pair according to the second embodiment. The process illustrated in the flowchart in FIG. 9 corresponds to an example of the process that is performed at Step S6 in FIG. 5. The flow of the process of selecting the cluster that forms a pair according to the present embodiment will be described below with reference to FIG. 9.

The pair selection unit 104 calculates the number of points located at the boundary between the classes in the interpolation process target cluster by using Expression (10) (Step S301).

Similarly, the pair selection unit 104 calculates the number of points located at the boundary between the classes at a point in a different class and the same group with respect to the interpolation process target cluster (Step S302).

Similarly, the pair selection unit 104 calculates the number of points located at the boundary between the classes in the comparison target cluster that is a cluster that belongs to the same class and a different group with respect to the interpolation process target cluster (Step S303).

Similarly, the pair selection unit 104 calculates the number of points located at the boundary between the classes of a point in the different class and the same group with respect to the comparison target cluster (Step S304).

Subsequently, the pair selection unit 104 calculates the neighborhood disparity by using Expression (11) (Step S305).

Further, the pair selection unit 104 calculates the inter-class interpolation probability by Expression (12) by using the neighborhood disparity (Step S306).

Thereafter, the pair selection unit 104 determines whether to perform the inter-class interpolation or the inter-group interpolation in accordance with the inter-class interpolation probability, and selects a cluster that forms a pair in accordance with the determination (Step S307).

As described above, the information processing apparatus according to the present embodiment determines whether to perform the inter-class interpolation while taking into account the neighbor densities of all of the clusters without limiting to a cluster of a specific group. With this configuration, the information processing apparatus is able to generate the synthetic data while taking into account a state of a data distribution of the interpolation process target cluster with respect to the entire training data, so that it is possible to further improve a trade-off between the prediction accuracy and the fairness.

Hardware Configuration

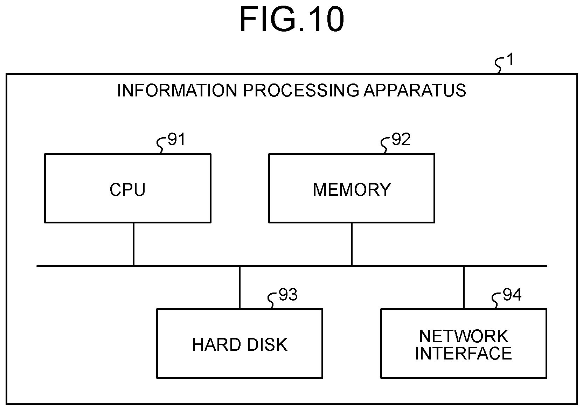

FIG. 10 is a hardware configuration diagram of the information processing apparatus. The information processing apparatus 1 illustrated in FIG. 1 includes, as illustrated in FIG. 10 for example, a central processing unit (CPU) 91, a memory 92, a hard disk 93, and a network interface 94. The CPU 91 is connected to the memory 92, the hard disk 93, and the network interface 94 via a bus.

The network interface 94 is an interface for performing communication between the information processing apparatus 1 and an external apparatus. The network interface 94 relays communication between the CPU 91 and the terminal device 2, for example.

The hard disk 93 is an auxiliary storage device. The hard disk 93 is able to store therein the input training data 120 and the machine learning model 11 illustrated in FIG. 1. Further, the hard disk 93 stores therein, for example, various programs including instructions for implementing the functions of the control unit 10 and the input-output control unit 12 illustrated in FIG. 1.

The memory 92 is main storage device. As the memory 92, for example, a dynamic random access memory (DRAM) may be used.

The CPU 91 reads various programs from the hard disk 93, loads the various programs onto the memory 92, and executes the programs. With this configuration, the CPU 91 is able to implement the functions of the control unit 10 and the input-output control unit 12 as illustrated in FIG. 1.

According to one aspect of the present invention, it is possible to reduce probability of occurrence of overfitting.

All examples and conditional language recited herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

**Claims**

1.  An training data generating program executable by one or more computers, the training data generation program comprising:

    an instruction for identifying, from among a plurality of pieces of training data, a first plurality of pieces of training data, a second plurality of pieces of training data, and a third plurality of pieces of training data, each of the first plurality of pieces of training data having a label of a first value and a first attribute of a second value, each of the second plurality of pieces of training data having the label of the first value and the first attribute of a third value, each of the third plurality of pieces of training data having the label of a fourth value and the first attribute of the second value;
    an instruction for selecting first training data from among the second plurality of pieces of training data or the third plurality of pieces of the training data based on a specific probability; and
    an instruction for generating third training data having the label of the first value and the first attribute of the second value by using second training data of the first plurality of pieces of training data and the first training data.

2.  The training data generating program according to claim 1, the process further including:
    according to claim 1, the process further including:

    an instruction for identifying, from among the plurality of pieces of training data, a plurality of pieces of neighbor training data for which distances from the second training data meet a specific criterion; and
    the instruction for determining the specific probability based on number of pieces of training data having the labels of the first values among the plurality of pieces of neighbor training data.

3.  The training data generating program according to claim 2, the process further including:

    an instruction for identifying, from among the plurality of pieces of training data, a plurality of pieces of first neighbor training data for which distances from the first plurality of pieces of training data meet the specific criterion;
    an instruction for identifying, from among the plurality of pieces of training data, a plurality of pieces of second neighbor training data for which distances from the second plurality of pieces of training data meet the specific criterion; and
    the instruction for determining the specific probability based on number of pieces of training data having the labels of the first values among the plurality of pieces of first neighbor training data and based on number of pieces of training data having the labels of the first values among the plurality of pieces of second neighbor training data.

4.  The training data generating program according to claim 1, the process further including:

    an instruction for identifying, from among the plurality of pieces of training data, a plurality of pieces of first neighbor training data for which distances from the first plurality of pieces of training data meet the specific criterion;
    an instruction for identifying, from among the plurality of pieces of training data, a plurality of pieces of second neighbor training data for which distances from the third plurality of pieces of training data meet the specific criterion;
    an instruction for identifying, from among the plurality of pieces of training data, a plurality of pieces of third neighbor training data for which distances from the second plurality of pieces of training data meet the specific criterion;
    an instruction for identifying, from among the plurality of pieces of training data, a plurality of pieces of fourth neighbor training data for which distances from a fourth plurality of piece of training data having the labels of the fourth values and the first attributes of the third values meet the specific criterion; and
    the instruction for determining the specific probability based on number of pieces of data located at a boundary with data having the label of the fourth value among the pieces of training data having the labels of the first values included in the pieces of first neighbor training data, number of pieces of data located at a boundary with data having the label of the first value among the pieces of training data having the labels of the fourth values included in the second neighbor training data, number of pieces of data located at a boundary with data having the label of the fourth value among the pieces of training data having the labels of the first values included in the third neighbor training data, and number of pieces of data located at a boundary with data having the label of the first value among the pieces of training data having the labels of the fourth values included in the fourth neighbor training data.

**5.** The training data generating program according to claim 1, the process further including

an instruction for identifying, from among the plurality of pieces of training data, a plurality of pieces of neighbor training data for which distances from the first training data meet a specific criterion;
an instruction for determining a weight based on a distance of each piece of the training data from each piece of the first plurality of pieces of training data; and
an instruction for generating the third training data by using the first training data, the second training data, and the weight.

**6.** A computer-implemented training data generation method comprising:

identifying, from among a plurality of pieces of training data, a first plurality of pieces of training data, a second plurality of pieces of training data, and a third plurality of pieces of training data, each of the first plurality of pieces of training data having a label of a first value and a first attribute of a second value, each of the second plurality of pieces of training data having the label of the first value and the first attribute of a third value, each of the third plurality of pieces of training data having the label of a fourth value and the first attribute of the second value;
selecting first training data from among the second plurality of pieces of training data or the third plurality of pieces of the training data based on a specific probability; and
generating third training data having the label of the first value and the first attribute of the second value by using second training data of the first plurality of pieces of training data and the first training data.

**7.** The computer-implemented training data generation method according to claim 1, the process further including:

identifying, from among the plurality of pieces of training data, a plurality of pieces of neighbor training data for which distances from the second training data meet a specific criterion; and
determining the specific probability based on number of pieces of training data having the labels of the first values among the plurality of pieces of neighbor training data.

**8.** The computer-implemented training data generation method according to claim 2, the process further including:

identifying, from among the plurality of pieces of training data, a plurality of pieces of first neighbor training data for which distances from the first plurality of pieces of training data meet the specific criterion;
identifying, from among the plurality of pieces of training data, a plurality of pieces of second neighbor training data for which distances from the second plurality of pieces of training data meet the specific criterion; and
determining the specific probability based on number of pieces of training data having the labels of the first values among the plurality of pieces of first neighbor training data and based on number of pieces of training data having the labels of the first values among the plurality of pieces of second neighbor training data.

**9.** The computer-implemented training data generation method according to claim 1, the process further including:

identifying, from among the plurality of pieces of training data, a plurality of pieces of first neighbor training data for which distances from the first plurality of pieces of training data meet the specific criterion;
identifying, from among the plurality of pieces of training data, a plurality of pieces of second neighbor training data for which distances from the third plurality of pieces of training data meet the specific criterion;
identifying, from among the plurality of pieces of training data, a plurality of pieces of third neighbor training data for which distances from the second plurality of pieces of training data meet the specific criterion;
identifying, from among the plurality of pieces of training data, a plurality of pieces of fourth neighbor training data for which distances from a fourth plurality of piece of training data having the labels of the fourth values and the first attributes of the third values meet the specific criterion; and
determining the specific probability based on number of pieces of data located at a boundary with data having the label of the fourth value among the pieces of training data having the labels of the first values included in

EP 4 336 420 A1

the pieces of first neighbor training data, number of pieces of data located at a boundary with data having the label of the first value among the pieces of training data having the labels of the fourth values included in the second neighbor training data, number of pieces of data located at a boundary with data having the label of the fourth value among the pieces of training data having the labels of the first values included in the third neighbor training data, and number of pieces of data located at a boundary with data having the label of the first value among the pieces of training data having the labels of the fourth values included in the fourth neighbor training data.

10. The computer-implemented training data generation method according to claim 1, the process further including:

identifying, from among the plurality of pieces of training data, a plurality of pieces of neighbor training data for which distances from the first training data meet a specific criterion;
determining a weight based on a distance of each piece of the training data from each piece of the first plurality of pieces of training data; and
generating the third training data by using the first training data, the second training data, and the weight.

11. An information processing apparatus comprising:

one or more memories; and
one or more processors coupled to the one or more memories, the one or more processor, alone or collectively, being configured to
identify, from among a plurality of pieces of training data, a first plurality of pieces of training data, a second plurality of pieces of training data, and a third plurality of pieces of training data, each of the first plurality of pieces of training data having a label of a first value and a first attribute of a second value, each of the second plurality of pieces of training data having the label of the first value and the first attribute of a third value, each of the third plurality of pieces of training data having the label of a fourth value and the first attribute of the second value,
select first training data from among the second plurality of pieces of training data or the third plurality of pieces of the training data based on a specific probability, and
generate third training data having the label of the first value and the first attribute of the second value by using second training data of the first plurality of pieces of training data and the first training data.

# FIG.1

INFORMATION PROCESSING APPARATUS 1

CONTROL UNIT 10

101 CLUSTER GENERATION UNIT
102 DETERMINATION UNIT
103 CLUSTER SELECTION UNIT
104 PAIR SELECTION UNIT
105 TRAINING EXECUTION UNIT
106 SECOND SAMPLE SELECTION UNIT
107 FIRST SAMPLE SELECTION UNIT
108 PREDICTION UNIT
109 SYNTHETIC DATA GENERATION UNIT
110 WEIGHT CALCULATION UNIT

120 INPUT TRAINING DATA

11 MACHINE LEARNING MODEL

12 INPUT-OUTPUT CONTROL UNIT

2 TERMINAL DEVICE

# FIG.2

# FIG.3

# FIG.4

EP 4 336 420 A1

FIG.5

START

DIVIDE ACQUIRED DATA INTO INPUT TRAINING DATA AND TEST DATA — S1

PERFORM CLUSTERING ON INPUT TRAINING DATA AND DIVIDE INPUT TRAINING DATA INTO CLUSTERS — S2

IDENTIFY MAXIMUM SIZE AND MINIMUM SIZE OF CLUSTERS — S3

S4

$m/M < B$? NO

YES

SELECT INTERPOLATION PROCESS TARGET CLUSTER FROM AMONG UNSELECTED CLUSTERS AMONG CANDIDATE CLUSTERS FOR INTERPOLATION TARGET — S5

PROCESS OF SELECTING CLUSTER THAT FORMS PAIR — S6

SELECT SINGLE PIECE OF DATA (POINT i) IN INTERPOLATION PROCESS TARGET CLUSTER — S7

PROCESS OF SELECTING DATA (POINT j) IN CLUSTER THAT FORMS PAIR — S8

CALCULATE WEIGHT FOR INTERPOLATION — S9

PERFORM INTERPOLATION BETWEEN POINT i AND POINT j AND GENERATE SYNTHETIC DATA — S10

S11

NO $|C_{y,s}|/M \geq B$?

YES

S12

NO IS INTERPOLATION PROCESS COMPLETED ON ALL OF CANDIDATE CLUSTERS FOR INTERPOLATION TARGET?

YES

GENERATE TRAINING DATA — S13

PERFORM TRAINING ON MACHINE LEARNING MODEL BY USING TRAINING DATA — S14

PERFORM EVALUATION BY USING TEST DATA AND GIVE NOTICE OF EVALUATION RESULT — S15

END

23

# FIG.6

START

↓

CALCULATE AVERAGE NEIGHBOR DENSITY OF INTERPOLATION PROCESS TARGET CLUSTER ～S101

↓

CALCULATE AVERAGE NEIGHBOR DENSITY OF SAME GROUP OTHER THAN INTERPOLATION PROCESS TARGET CLUSTER ～S102

↓

CALCULATE INTER-CLASS INTERPOLATION PROBABILITY ～S103

↓

SELECT CLUSTER THAT FORMS PAIR IN ACCORDANCE WITH INTER-CLASS INTERPOLATION PROBABILITY ～S104

↓

END

# FIG.7

START

S201
IS INTER-CLASS
INTERPOLATION TO BE
PERFORMED?

NO

YES

S202
CALCULATE INTER-CLASS
INTERPOLATION POINT SELECTION
PROBABILITY

S204
CALCULATE INTER-GROUP
INTERPOLATION POINT SELECTION
PROBABILITY

S203
SELECT SINGLE PIECE OF DATA
(POINT j) IN CLUSTER THAT FORMS
PAIR IN ACCORDANCE WITH
INTER-CLASS INTERPOLATION POINT
SELECTION PROBABILITY

S205
SELECT SINGLE PIECE OF DATA
(POINT j) IN CLUSTER THAT FORMS
PAIR IN ACCORDANCE WITH
INTER-GROUP INTERPOLATION
POINT SELECTION PROBABILITY

END

# FIG.8

ACCURACY

301

302

300

GOOD TRADE-OFF

FAIRNESS

# FIG.9

START

↓

CALCULATE THE NUMBER OF POINTS LOCATED AT THE BOUNDARY BETWEEN THE CLASSES IN INTERPOLATION PROCESS TARGET CLUSTER — S301

↓

CALCULATE NUMBER OF POINTS LOCATED AT BOUNDARY BETWEEN CLASSES AT POINT IN DIFFERENT CLASS AND SAME GROUP WITH RESPECT TO INTERPOLATION PROCESS TARGET CLUSTER — S302

↓

CALCULATE NUMBER OF POINTS LOCATED AT BOUNDARY BETWEEN CLASSES IN COMPARISON TARGET CLUSTER — S303

↓

CALCULATE NUMBER OF POINTS LOCATED AT BOUNDARY BETWEEN CLASSES AT POINT IN DIFFERENT CLASS AND SAME GROUP WITH RESPECT TO COMPARISON TARGET CLUSTER — S304

↓

CALCULATE NEIGHBORHOOD DISPARITY — S305

↓

CALCULATE INTER-CLASS INTERPOLATION PROBABILITY — S306

↓

SELECT CLUSTER THAT FORMS PAIR IN ACCORDANCE WITH INTER-CLASS INTERPOLATION PROBABILITY — S307

↓

END

# FIG.10

INFORMATION PROCESSING APPARATUS ⸖1

⸖91

CPU

⸖92

MEMORY

⸖93

HARD DISK

⸖94

NETWORK INTERFACE

**EUROPEAN SEARCH REPORT**

Europäisches Patentamt
European Patent Office
Office européen des brevets

Application Number

EP 23 17 9673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SALAZAR TERESA ET AL: "FAWOS: Fairness-Aware Oversampling Algorithm Based on Distributions of Sensitive Attributes", IEEE ACCESS, IEEE, USA, vol. 9, 27 May 2021 (2021-05-27), pages 81370-81379, XP011859624, DOI: 10.1109/ACCESS.2021.3084121 [retrieved on 2021-06-08] * Sections III and IV * | 1-11 | INV. G06N20/00 |
| X,D | YANG YANG ET AL: "Oversampling methods combined clustering and data cleaning for imbalanced network data", INTELLIGENT AUTOMATION AND SOFT COMPUTING, vol. 26, no. 5, 1 January 2020 (2020-01-01), pages 1139-1155, XP093125325, US ISSN: 1079-8587, DOI: 10.32604/iasc.2020.011705 [retrieved on 2024-01-30] * the whole document * | 1-11 | |
| A | LIU JIE ED – YIGITCANLAR TAN: "A minority oversampling approach for fault detection with heterogeneous imbalanced data", EXPERT SYSTEMS WITH APPLICATIONS, ELSEVIER, AMSTERDAM, NL, vol. 184, 1 July 2021 (2021-07-01), XP086774976, ISSN: 0957-4174, DOI: 10.1016/J.ESWA.2021.115492 [retrieved on 2021-07-01] * the whole document * | 1-11 | TECHNICAL FIELDS SEARCHED (IPC)<br><br>G06N |

The present search report has been drawn up for all claims

| Place of search | Date of completion of the search | Examiner |
|---|---|---|
| The Hague | 30 January 2024 | Jacobs, Jan-Pieter |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOYMALLYA CHAKRABORTY ; SUVODEEP MAJUMDER ; TIM MENZIES.** Bias in Machine Learning Software: Why? How? What to do?. *The 29th ACM Joint European Software Engineering Conference and Symposium on the Foundations of Software Engineering (ESEC/FSE),* 20210823